(19)

**Europäisches Patentamt**

**European Patent Office**

**Office européen des brevets**

(11) **EP 2 228 396 A1**

(12) **EUROPÄISCHE PATENTANMELDUNG**

(43) Veröffentlichungstag:
**15.09.2010 Patentblatt 2010/37**

(51) Int Cl.:
***C08F 212/08*** *(2006.01)* ***C09D 125/08*** *(2006.01)*

(21) Anmeldenummer: **09003710.2**

(22) Anmeldetag: **14.03.2009**

| | |
|---|---|
| (84) Benannte Vertragsstaaten:<br>**AT BE BG CH CY CZ DE DK EE ES FI FR GB GR HR HU IE IS IT LI LT LU LV MC MK MT NL NO PL PT RO SE SI SK TR**<br>Benannte Erstreckungsstaaten:<br>**AL BA RS** | (71) Anmelder: **Bayer MaterialScience AG**<br>**51368 Leverkusen (DE)**<br><br>(72) Erfinder:<br> • **Grablowitz, Hans, Georg, Dr.**<br>  **41462 Neuss (DE)**<br> • **Gertzmann, Rolf, Dr.**<br>  **51377 Leverkusen (DE)** |

(54) **Vernetzte wässrige Polyacrylatdispersion**

(57) Die vorliegende Erfindung betrifft vernetzte, wässrige Polyacrylat-Dispersionen, ein Verfahren zu deren Herstellung und ihre Verwendung als Beschichtungsmittel auf nicht flexiblen Substraten.

**EP 2 228 396 A1**

**Beschreibung**

Die vorliegende Erfindung betrifft vernetzte, wässrige Polyacrylat-Dispersionen, ein Verfahren zu deren Herstellung und ihre Verwendung als Beschichtungsmittel auf nicht flexiblen Substraten.

Wässrige Polyacrylatbindemittel sind schon seit längerem bekannt und werden häufig als Bestandteil von Beschichtungsmitteln verwendet. Die Eigenschaften der Beschichtung, wie z.B. Lösemittel- und Wasserbeständigkeit, hängen unter anderem von der Molmasse des Bindemittels ab, wobei eine hohe Molmasse häufig mit einer hohen Beständigkeit einher geht. Ferner sind für hohe Lösmittelbeständigkeiten generell hohe Glastemperaturen von Vorteil, da die Diffusionsgeschwindigkeit von Lösmitteln unterhalb der Glastemperatur der Beschichtung stark erniedrigt ist.

Um eine möglichst hohe Lösemittelstabilität gegenüber polaren Lösmitteln wie z.B. Alkoholen zu erreichen ist es im Allgemeinem vorteilhaft apolare Monomere wie z.B. Styrol zu verwenden.

In der US-P 3,104,231 werden vernetzte, wässrige Polyacrylat-Dispersionen beschrieben, die mindestens 23 Gew.-% Acrylnitril enthalten und daher eine zu hohe Polarität aufweisen.

In der US-P 5,225,456 werden wässrige Dispersionen zur Beschichtung von Kunststoff offenbart, die neben Alkylestern der Acrylsäure oder Methacrylsäure auch Arylester enthalten. In den Ausführungsbeispielen werden nur nicht-vernetzte Polymere offenbart. Arylester der Acrylsäure oder Methacrylsäure weisen im Verlgeich zu den entsprechenden Alkylestern eine niedrigere Polarität auf, sind aber aufgrund der Estergruppe polarer als Styrol.

US-P 4,056,503 beschreibt vernetzte Dispersionen auf Basis von Vinylacetat und (Meth)acrylsäureestern. Die Dispersionen enthalten kein Styrol als hydrophobierendes Monomer.

Aufgabe der vorliegenden Erfindung ist die Herstellung von wässrigen, vernetzten Polyacrylat-Dispersionen, die eine verhältnismäßig hohe Beständigkeit gegenüber Alkoholen aufweisen.

Überraschenderweise wurde gefunden, dass styrolreiche, vernetzte Polyacrylat-Dispersionen zu Beschichtungen mit hoher Alkoholbeständigkeit führen und die im Stand der Technik aufgezeigten Nachteile nicht aufweisen.

Gegenstand der vorliegenden Erfindung ist eine wässrige Polyacrylat-Dispersion enthaltend als Aufbaukomponenten

a) 60 bis 90, bevorzugt 65 bis 80 Gew.-% Styrol und/oder andere vinylaromatische Verbindungen,

b) 6,5 bis 20, bevorzugt 7,5 bis 10 Gew.-% eines Acrylsäureesters,

c) 0,5 bis 5, bevorzugt 0,6 bis 2 Gew.-% einer Polyvinylidenverbindung einer Funktionalität $\geq 2$,

d) 2 bis 5, bevorzugt 2 bis 3 Gew.-% eines säurefunktionellen, olefinisch ungesättigten Monomers sowie

e) 1 bis 10, bevorzugt 5 bis 8 Gew.-% eines Methacrylsäureesters,

wobei sich die angegebenen Gewichtsanteile zu 100 Gew.-% addieren und die resultierende Dispersion eine Glastemperatur von > 70 °C, bevorzugt von 75 °C bis 90 °C, aufweist.

Der in dieser Erfindung verwendete Begriff Glastemperatur bedeutet die Temperatur, bei der das Polymer von einem glasartigen Zustand in einen Zustand höherer Segmentbeweglichkeit der Polymerkette übergeht. Die Glastemperatur von statistischen Copolymeren kann nach der Fox-Gleichung (Bulletin of the American Physical Society 1, 3, Seite 123, 1956) berechnet werden:

$$\frac{1}{T_g} = \frac{w_1}{T_{g(1)}} + \frac{w_2}{T_{g(2)}} + \dots \frac{w_i}{T_{g(i)}} + \dots \frac{w_n}{T_{g(n)}}$$

Wobei $T_{g(i)}$ die Glastemperatur des jeweiligen Homopolymeren i von n Monomeren und $w_i$ den Massenanteil des Monomeren i bedeutet, wobei die Summe aller Massenanteile $w_1 + w_2 + \dots w_i + \dots w_n = 1$ ist.

Soweit nicht anders gekennzeichnet, beziehen sich alle in der vorliegenden Erfindung dargestellten Glastemperaturen auf die nach der Fox-Gleichung berechneten Glastemperaturen.

Die experimentelle Glasübergangstemperatur ($T_g$) von Polymeren kann in bekannter Weise z.B. mittels Differential Scanning Calorimetry (DSC) ermittelt werden.

Die in den erfindungsgemäße Dispersion enthaltenen Polymer-Partikel weisen eine mittlere Teilchengröße von 80 bis 200 nm, bevorzugt von 90 bis 170 nm, besonders bevorzugt von 100 bis 130 nm auf.

Der Feststoffgehalt einer Dispersion wird generell über das Verhältnis von Wasser zu organischen Ausgangsstoffen bestimmt. Der Feststoffgehalt der erfindungsgemäßen Polyacrylat-Dispersion liegt zwischen 25 und 65 Gew.-%, bevorzugt zwischen 30 und 55 Gew.-%, besonders bevorzugt zwischen 35 und 45 Gew.-%.

Geeignete Vinylaromaten a) mit bis zu 20 C-Atomen sind beispielsweise Styrol, Vinyltoluol, o- und p-Methylstyrol, □Butylstyrol, 4-n-Butylstyrol, 4-n-Decylstyrol, halogenierte Styrole, wie beispielsweise Monochlorstyrole, Dichlorstyrole, Tribromstyrole oder Tetrabromstyrole. Bevorzugt ist Styrol.

Geeignete Ester b) der Acrylsäure umfassen insbesondere Methylacrylat, Ethylacrylat, Propylacrylat, Isopropylacrylat, n-Butylacrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyl-octylacrylat, 2-tert.-Butylheptylacrylat, 3-iso-Propylheptyl-acrylat, Decylacrylat, Undecylacrylat, 5-Methylundecylacrylat, Dodecylacrylat, 2-Methyldodecylacrylat, Tride-cylacrylat, 5-Methyltridecylacrylat, Tetradecylacrylat, Pentadecylacrylat, Hexadecylacrylat, 2-Methylhexade-cylacrylat, Heptadecylacrylat, 5-iso-Propylheptadecylacrylat, 5-Ethyloctadecylacrylat, Octadecylacrylat, Nona-decylacrylat, Eicosylacrylat, Cycloalkylacrylate, wie beispielsweise Cyclopentylacrylat, Cyclohexylacrylat, 3-Vinyl-2-butylcyclohexylacrylat, Cycloheptylacrylat, Cyclooctylacrylat, Bornylacrylat, Tetrahydrofurfurylacrylat und Isobornylacrylat. Bevorzugt sind Ethylacrylat, n-Butylacrylat, Ethylhexylacrylat, Cyclohexylacrylat, besonders bevorzugt sind Ethylacrylat, n-Butylacrylat oder Ethylhexylacrylat.

Zu den geeignete Polyvinylidenverbindungen c) zählen solche Verbindungen, die mindestens über zwei olefinisch ungesättigte Bindungen verfügen. Dazu zählen insbesondere Acryl- oder Methacrylsäurester von Polyolen einer Funktionalität ≥ 2, wie z.B. Ethylenglykoldiacrylat, Diethylenglykoldiacrylat, Glycerindiacrylat, Glycerintriacrylat, Ethylenglykoldimethacrylat, 1,3-Propandioldiacrylat, 1,3-Propandioldimethacrylat, 1,4-Butandioldiacrylat, 1,4-Butandioldimethacrylat, 1,6-Hexandioldiacrylat, 1,6-Hexandioldimethacrylat, 1,2,4-Butantrioltrimethacrylat, 1,4-Cyclohexandioldiacrylat, 1,4-Benzoldioldimethacrylat, Pentaerythritoltri- und tetraacrylat bzw. -methacrylat, Dipentaerythritolhexaacrylat, Tripentaerythritolhexaacrylat, Tripentaerythritoloctacrylat, Trimethylolpropantriacrylat, Trimethylolpropantrimethacrylat, Trimethylolethantriacrylat, Sorbitolhexaacrylat, 1,3-Propandioldiacrylat, 1,5-Pentadioldimethacrylat, 1,9-Nonandioldimethacrylat, 1,10-Decandioldimethacrylat, Propylenglykoldiacrylat, Dipropylenglykoldiacrylat, Diacrylate und Dimethacrylate vom Polyethylenglykol einer Molmasse von 200 bis 1500 g/mol. Bevorzugt sind 1,4-Butandioldiacrylat, Trimethylolpropandimethacrylat, Ethylenglykoldimethacrylat, 1,6-Hexandioldimethacrylat, besonders bevorzugt sind Ethylenglykoldimethacrylat oder 1,6-Hexandioldimethacrylat. Es ist auch möglich Mischungen der entsprechenden polyfunktionellen Vernetzer zu verwenden.

Geeignete olefinisch ungesättigte, säurefunktionelle Monomere d) sind sulfon-, phosphat- oder carbonsäurefunktionelle Monomere, bevorzugt sind carbonsäurefunktionelle Monomere wie Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester. Ferner geeignet als Verbindungen der Komponente d) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden. Besonders bevorzugt sind Acryl- oder Methacrylsäure, ganz besonders bevorzugt ist Acrylsäure.

Geeignete Ester e) der Methacrylsäure umfassen insbesondere Methylmethacrylat, Ethylmethacrylat, Propylmethacrylat, Isopropylmethacrylat, n-Butylmethacrylat, sec-Butylmethacrylat, tert-Butylmethacrylat, Pentylmethacrylat, Hexylmethacrylat, Heptylmethacrylat, Octylmethacrylat, 2-Octylmethacrylat, Ethylhexylmethacrylat, Nonylmethacrylat, 2-Methyloctylmethacrylat, 2-tert.-Butylheptylmethacrylat, 3-iso-Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylme-thacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butylcyclohexylmethacrylat, Cycloheptylmethacrylat, Cyclooctylmethacrylat, Bornylmethacrylat, Tetrahydrofurfurylmethacrylat oder Isobornylmethacrylat. Weitherin können die Methacrylsäurederivate auch in Form der korrespondierenden Nitrile oder Amide eingesetzt werden, wie z.B. Methacrylnitril oder Methacrylamid. Außerdem besteht die Möglichkeit andere funktionelle Monomere in Abhängigkeit von der gewünschten Anwendung zu verwenden, wie beispielsweise Diacetonmethacrylamid oder Acetoacetoxyethylmethacrylat. Bevorzugt sind Methylmethacrylat, Ethylmethacrylat, Butylmethacrylat, tert-Butylmethacrylat, besonders bevorzugt sind Methylmethacrylat, tert-Butylmethacrylat oder Butylmethacrylat.

Die Herstellung der erfindungsgemäßen Polyacrylat-Dispersion kann auf an sich bekannte Weise, beispielsweise mittels Emulsionspolymerisation erfolgen. Zweckmäßigerweise erfolgt sie durch ein Zulauf-Verfahren, bei welchem zunächst Wasser, Emulgator und gegebenenfalls eine geringe Menge Initiator vorlegt wird. Dabei enthält die Vorlage bevorzugt 40 bis 80 Gew.-Teile Wasser, bezogen auf die gesamte Wassermenge, 0,1 bis 1,5 Gew.-Teile Emulgator, bezogen auf den Feststoff, und gegebenenfalls 0,01 bis 0,3 Gew.% Initiator, bezogen auf den Feststoff, wobei sich die angegebenen Gewichtsteile zu 100,00 Gewichtsteilen addieren. Anschließend erfolgt die Dosierung einer geringen Menge der Monomere, bevorzugt 5 bis 15 Gew.-%, gegebenenfalls erfolgt gleichzeitig die Dosierung des Initiators, bevorzugt 0,01 bis 0,3 Gew.% zur Bildung einer internen Saat auf die die weiteren Polymerisationsschritte erfolgen.

Zu dieser internen Saat werden dann kontinuierlich die Monomere in den genannten Verhältnissen zugegeben und bis zu einem Umsatz von mindestens 95,0 Gew.-%, bevorzugt mindestens 98,0 Gew.-%, besonders bevorzugt mindestens 99,0 Gew.-%, ganz besonders bevorzugt mindestens 99,5 Gew.-%, jeweils bezogen auf ihr Gesamtgewicht, polymerisiert. Die Emulsionspolymerisation erfolgt in der Regel bei einer Temperatur von 30 bis 100 °C, bevorzugt von 50 bis 90 °C.

Gegenstand der vorliegenden Erfindung ist somit auch ein Verfahren zur Herstellung der erfindungsgemäßen Polyacrylat-Dispersion, **dadurch gekennzeichnet, dass** zunächst eine Teilmenge des Emulgators zusammen mit der Hauptwassermenge vorgelegt wird, daraufhin 10 Gew.-% der Monomermischung ohne Vernetzungsmittel in einem ersten Polymerisationsschritt unter paralleler Dosierung der wässrigen Initiatorlösung zu einer Polymersaat umgesetzt werden und anschließend die weitere Dosierung der Monomermischung mit dem Vernetzungsmittel c) erfolgt, wobei die wässrige Initiatorlösung zusammen mit dem Emulgator parallel zudosiert wird. Zur Erniedrigung des Restmonomergehaltes wird eine weitere geringe Menge der Initiatorlösung zur Nachpolymerisation zudosiert.

Die Initiierung der Polymerisation erfolgt mit den für die freie radikalische Polymerisation gebräuchlichen Initiatoren. Diese umfassen z.B. Wasserstoffperoxid, Hydroperoxide, wie tert-Butylhydroperoxid, Dialkylperoxide, wie Di-tert-butylperoxid, Diacylperoxide, Peroxyester, Peroxycarbonate, Peroxydicarbonate oder Peroxyketale. Ebenfalls geeignet sind wasserlösliche anorganische Persulfate, wie z.B. Ammonium- oder Natriumpersulfat. Außerdem können auch Azoinitiatoren, wie z.B. Azodiisobutyronitril eingesetzt werden. Die Inititatoren können durch Zugabe von geeigneten Reduktionsmitteln als Redox-Initiatoren verwendet werden. Geeignete Reduktionsmittel sind z.B. Natriumdisulfit, Natriumformaldehyd oder Isoascorbinsäure. Üblicherweise erfolgt die Polymerisation in Gegenwart von 0,05 Gew.-% bis 2,0 Gew.-%, bevorzugt 0,2 bis 0,8 Gew.-% Initiator, bezogen auf den Feststoff. Bevorzugt werden die anorganischen Persulfate oder organischen Hydroperoxide mit einer Konzentration von 0,2 bis 0,8 Gew.-%, bezogen auf den Feststoff, eingesetzt.

Die Stabilisierung der Dispersionen erfolgt unter anderem mittels ionischer und/oder nichtionischer Emulgatoren und/oder Schutzkolloiden. Als ionogene Emulgatoren kommen in erster Linie anionische Emulgatoren in Frage. Es kann sich dabei um die Alkali- oder Ammoniumsalze von Alkyl-, Aryl-, oder Alkylarylsulfonaten, -phosphaten, -phosponaten oder Verbindungen mit anderen anionischen Endgruppen handeln, wobei sich auch Oligo- oder Polyethylenoxid-Einheiten zwischen dem Kohlenwasserstoffrestcund der anionischen Gruppe befinden können. Typische Beispiele sind Natriumlaurylsulfat, Natriumlauryldiglykolsulfat, Natriumdecylglykolethersulfat, Natriumoctylphenolglykolethersulfat oder Natriumdodecylbenolsulfat.

Als nicht-ionische Emulgatoren werden üblicherweise Alkylpolyglykolether, wie Ethoxilierungsprodukte von Lauryl-, Oleyl- oder Stearylalkohol oder von Gemsichen wie Kokosfettalkohol. Ebenfalls geeignet sind Alkylphenolpolyglykolether, wie Ethoxilierungsprodukte von Octyl- oder Nonylphenol, Diisopropylphenolm, Triisopropylphenol, Di- oder Tri-tert-butylphenol. Neben den genannten Verbindungsklassen können auch Ethoxilierungsprodukte vom Propylenoxid eingesetzt werden.

Als geeignete Schutzkolloide verwendet man Naturstoffe wie Gummi arabicum, Stärke, Alginate oder modifizierte Naturstoffe wie Methyl-, Ehtyl-, Hydroxyalkyl- oder Carboxymethylcellulose oder synthetische Substanzen, wie Polyvinylalkohol oder modifzierte Polyvinylalkohole oder Polyvinylpyrrolidone.

Die Emulgatoren können durch eine entsprechende Funktionalisierung auch so modifiziert sein, dass sie mit den Monomeren radikalisch copolymerisieren (Surfmer).

Es ist weiterhin möglich auch Gemische der genannten Emulgatoren zu verwenden.

Bevorzugt wird als Emulgator ein Alkylphosphatester, wie z.B. Phosphatester von nichtionischen und Polyoxyethylenaddukten (erhältlich unter der Bezeichnung Dextrol OC® von der Firma Hercules, USA) eingesetzt. Die Gesamtmenge an Emulgator beträgt bezogen auf den Feststoff 0,3 bis 1,5 Gew.%, bevorzugt 0,3 bis 1,0 Gew.-%.

Die Emulsionspolymerisation erfolgt in der Regel bei 30 bis 100 °C, bevorzugt 50 bis 90 °C. Das Polymerisationsmedium kann sowohl nur aus Wasser, als auch aus Mischungen aus Wasser und damit mischbaren Flüssigkeiten wie Methanol bestehen. Bevorzugt wird nur Wasser verwendet. Die Emulsionspolymerisation kann sowohl als Batchprozess als auch in Form eines Zulaufverfahrens, einschließlich Stufen- oder Gradientenfahrweise, durchgeführt werden, bevorzugt ist das Zulaufverfahren. Bei dem Zulaufverfahren erfolgt die Polymerisation bei einem vergleichsweise geringen Monomerpolster, wobei ein oder mehrere Monomere in reiner oder emulgierter Form und die zumeist wasserlöslichen Hilfsmittel über mehrere räumlich getrennte Zuläufe kontinuierlich, stufenweise oder in Form eines Gradienten zudosiert werden. Die Einstellung der Teilchengröße erfolgt über die in situ Bildung einer internen Saat, wobei die Partikelgröße der Saat über das Verhältnis von Emulgator zu Monomer determiniert wird. Es ist ebenfalls möglich die Teilchengröße durch die Vorlage einer externen Saat mit definierter Teilchengröße zu steuern. Die Art und Weise, in der der Initiator im Verlauf der radikalischen wässrigen Emulsionspolymerisation dem Polymerisationsgefäß zugegeben wird, ist dem Fachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Bevorzugt wird ein Teil vorgelegt und der Rest nach Maßgabe des Verbrauchs der Polymerisationszone zugeführt.

Eine monomodale, enge Teilchengrößenverteilung, d.h. ein geringer Polydispersitätsindex, ist durch dem Fachmann bekannte Maßnahmen erhältlich, z. B. durch Variation der Menge, des Dosierprofils und Struktur der grenzflächenaktiven Verbindung (Emulgator und/oder Schutzkolloide) und/oder entsprechende Rührergeschwindigkeiten.

Um einen vollständigen Umsatz zu gewährleisten und die Dispersion von Spuren von freiem Monomer zu befreien, erfolgt bevorzugt eine Nachaktivierung, wobei geringe Mengen Initiators, bevorzugt 0,01 bis 0,2 Gew.-%, zugegeben werden. Es ist außerdem möglich die Dispersion durch physikalische Methoden, wie z.B. durch anschließende Wasserdampfdestillation aufzureinigen.

Die Viskosität der erfindungsgemäßen Polymerdispersionen liegt zwischen 5 und 300 mPas, bevorzugt zwischen 10 und 150 mPas besonders bevorzugt zwischen 15 und 100 mPas.

Der pH-Wert der Dispersionen ist durch Zugabe definierter Mengen einer Base variierbar und kann zwischen pH 3 bis 12 liegen, bevorzugt ist ein pH-Wert von 6 bis 9. Zumeist erfolgt die Polymerisation im saurem pH-Bereich und die Neutralisation erfolgt nach beendeter Polymerisation. Es ist aber auch möglich einen Teil der Base schon im Verlauf der Polymerisation zuzuführen, um gegebenenfalls einer Agglomeration vorzubeugen. Als Basen können die dem Fachmann bekannten anorganischen oder organischen Basen verwendet werden, dazu zählen z.B. wässrige Lösungen von Alkalihydroxiden, Ammoniumhydroxid, organische Amine wie Triethylamin oder Ethyldiisopropylamin. Bevorzugt werden Alkalihydroxide und Ammoniumhydroxid.

Damit die erfindungsgemäße Polyacrylat-Dispersion als Beschichtungsmittel mit guter und gleichmäßiger Filmoptik eingesetzt werden kann, ist ein möglichst geringer Gehalt an Mikrokoagulat erforderlich. Dabei kann die Entstehung des Mikrokoagulats durch die dem Fachmann bekannten Maßnahmen, wie Rührergeometrie, Rührgeschwindigkeit, Zulaufzeit, Feststoffgehalt, Menge Dosierschema und Typ verwendeter grenzflächenaktiver Verbindungen und Menge an Verbindungen zur elektrostatischen und/oder sterischen Stabilisierung unterdrückt werden. Es ist auch möglich entstandenes Mikrokoagulat durch Filtration abzutrennen.

Die erfindungsgemäße Polyacrylat-Dispersion kann mit weiteren üblichen Hilfs- und Zusatzstoffen versetzt werden, dazu zählen beispielsweise Biozide, Entschäumer, Antioxidantien, UV-Stabilisatoren, Filmbildungshilfsmittel, Verdicker oder Colösemittel.

Die erfindungsgemäße Polyacrylat-Dispersion kann als filmbildender Bestandteil von Lacken verwendet werden und eignen sich zur Beschichtung von harten Substraten wie Holz, Metall, Kunststoff, Glas und mineralischen Untergründen, bevorzugt ist die Verwendung in Holz- und Kunststoffbeschichtungen. Die erfindungsgemäße Dispersion kann in Form von Klarlacken oder pigmentierten Lacken eingesetzt werden.

Es ist ebenfalls möglich die erfindungsgemäße Polyacrylat-Dispersion mit weiteren wässrigen Dispersionen zu kombinieren, dazu zählen beispielsweise weitere Polyacrylat-, Polystyrolacrylat-, Polyurethan-, Polyvinylacetat-, Styrol-Butadien-, Acrylnitril-Butadien-, Alklyen- oder Ethylen-Vinylacetat-Dispersionen.

Gegenstand der vorliegenden Erfindung sind wässrige Beschichtungsmittel, enthaltend die erfindungsgemäße wässrige Polyacrylat-Dispersion.

**Beispiele:**

*Chemikalien:*

Acrylsäure (ACS), CAS 79-10-7, Aldrich, DE

Methylmethacrylat (MMA), CAS 80-62-6, Aldrich, DE

Styrol (S), CAS 100-42-5, Aldrich, DE

n-Butylacrylat (BA), CAS 141-32-2, Aldrich, DDE

Ammoniumpersulfat (APS), CAS 7727-54-0, Aldrich, DE

Emulgator Tannemul® 951 (E), CAS 68610-22-0, Tanatex, DE

Hexandioldimethacrylat (HDDMA), CAS 6606-59-3, Röhm, DE

Trigonox®AW 70 (AW 70), CAS 75-91-2, Akzo, NL

Rongalit® C, CAS 79-25-4, BASF, DE

Fe(II)-Sulfat, CAS 10028-21-4, Aldrich DE

Trilon® B, CAS 8013-51-2, BASF, DE

BYK 346, Oberflächenadditiv, BYK Chemie, DE

*Methoden:*

Teilchengröße (MTG): Die Bestimmung der mittleren Teilchengröße (MTG) erfolgte mittels Laser-Korrelations-Spektroskopie (Gerät: Malvern Zetasizer 1000, Malvern Instruments LTD), es sind die Z-Mittel angegeben.
Festkörper (FSG): Die Bestimmung des Festkörpers erfolgte nach DIN-EN ISO 3251.
Pendelhärte: Die Messung der Pendelhärte nach König erfolgte nach DIN 53157.
Filmoptik: Es wurde eine optische Bewertung des Lackfilms vorgenommen, wobei hohe Zahlen eine schlechte Optik repräsentieren.
Ethanol-Beständigkeit: Die Ethanol-Beständigkeit wurde mittels eines Crockmetertests (Gerät: AATC, Atlas Electric Devives) mit 98%igem Ethanol geprüft. Es wurde das Schadensbild der Oberfläche nach 20 Doppelhüben beurteilt, wobei eine hohe Zahl eine hohe Beständigkeit bedeutet.

*Herstellung der Dispersionen:*

Im Folgenden Abschnitt wird eine allgemeine Synthesevorschrift zur Herstellung der erfindungsgemäßen Dispersionen beschrieben, die spezifischen Zusammensetzungen der einzelnen Versuche lassen sich aus Tab. 1 entnehmen.

**Allgemeine Synthesevorschrift:**

In einem 3 L Glasreaktor mit geregelter Heizung und Kühlung und Rührmotor werden unter Stickstoffatmosphäre Wasser mit der entsprechenden Emulgatormenge E1 vorgelegt. Die Lösung wird anschließend auf die angegebene Temperatur aufgeheizt. Nach Erreichen der Polymerisationstemperatur werden die Monomermischung M1 und die Initiatorlösung W1 für die Herstellung der internen Saat innerhalb von 30 min. über eine Dosierpumpe zugegeben, danach wird noch 30 min. nachgerührt. Danach werden die Monomermischung M2 und die wässrige Lösung W2 innerhalb von 240 min. bei der entsprechenden Temperatur zudosiert. Direkt nach Beendigung der Dosierungen M2 und W2 werden 0,05 Teile APS in 5 Teilen Wasser zur Nachaktivierung innerhalb von 60 min. zudosiert, die Dispersion wird noch über einen Zeitraum von 60 min. weiter gerührt und anschließend abgekühlt. Zur pH-Einstellung auf pH 7 wird die entsprechende Menge ammoniakalischer Lösung langsam zugetropft und die fertige Dispersion wird über ein 125 $\mu$m Filter abgeführt.

**Herstellung der Fe(II)-Sulfatlösung:**

Zu 0,1 g Eisen-II-sulfat werden 2,0 g Trilon B und 10 g E-Wasser gegeben, die Lösung wird immer frisch angesetzt.

*Klarlack-Formulierung der Dispersionen:*

Im folgenden Abschnitt wird eine allgemeine Vorschrift zur Formulierung der Beispielsdispersionen gezeigt, die Einwaagen können Tab. 2 entnommen werden.
Die Dispersion wird in einem Gefäß vorgelegt und gerührt. Anschließend erfolgt die Zugabe des Colösers Butlydiglykol mit der angegebenen Menge Wasser bei einer Rührgeswinigkeit von 1 - 1,5 m/s, es wird 5 min. gerührt. Schließlich wird das Additiv BYK 346 unter Rühren hinzugegeben und der Lack wird für mindestens 12 h stehen gelassen.

*Applikation der Formulierungen und Ergebnisse:*

Die Klarlacke wurden mittels eines Filmrakels mit einer Nassfilmdicke von 90 $\mu$m auf Glas aufgezogen und 30 min. bei 80 °C und anschließend 7 d bei Raumtemperatur getrocknet.

Tabelle 1: Rezepturen zur Herstellung der Polyacrylat-Dispersionen; bei den trunkierten Versuchen handelt es sich um die Gegenbeispiele

| Versuch | | 1* | 2* | 3* | 4* | 5 |
|---|---|---|---|---|---|---|
| Vorlage | E1 | 11,5 | 11,5 | 11,5 | 11,5 | 11,5 |
| | Wasser | 766,0 | 726,0 | 766,0 | 730,0 | 730,0 |
| M1 | MMA / g | 8,0 | 8,0 | 78,0 | 8,0 | 8,0 |
| | BA / g | 9,5 | 9,5 | 9,5 | 9,5 | 9,5 |
| | S / g | 78,0 | 78,0 | 8,0 | 78,0 | 78,0 |
| W1 | APS / g | 0,3 | 0,0 | 0,3 | 0,5 | 0,5 |
| | AW70/g | 0,0 | 1,8 | 0,0 | 1,8 | 1,8 |
| | Rongalit C / g | 0,0 | 1,2 | 0,0 | 1,2 | 1,2 |
| | Fe-Sulfat Lsg. / g | 0,0 | 0,5 | 0,0 | 0,5 | 0,5 |
| | Wasser | 20,0 | 60,0 | 20,0 | 60,0 | 60,0 |
| M2 | MMA / g | 76,0 | 76,0 | 704,0 | 76,0 | 61,3 |
| | BA / g | 80,0 | 80,0 | 80,0 | 80,0 | 80,0 |
| | HDDMA / g | 0,0 | 0,0 | 0,0 | 0,0 | 14,7 |
| | S / g | 704,0 | 704,0 | 76,0 | 704,0 | 704,0 |
| | tDDM / g | 0,0 | 0,0 | 0,0 | 4,0 | 0,0 |
| | ACS / g | 24,5 | 24,5 | 24,5 | 24,5 | 24,5 |
| W2 | APS / g | 5,9 | 0,0 | 5,9 | 0,0 | 0,0 |
| | E2 / g | 11,5 | 11,5 | 11,5 | 11,5 | 11,5 |
| | AW 70 / g | 0,0 | 7,2 | 0,0 | 7,2 | 7,2 |
| | Rongalit C / g | 0,0 | 3,5 | 0,0 | 3,5 | 3,5 |
| | Wasser / g | 600,0 | 600,0 | 600,0 | 600,0 | 600,0 |
| Neutralisation | Wasser / g | 71,6 | 48,4 | 71,6 | 50,8 | 44,5 |
| | $NH_3$ / g | 2,4 | 1,6 | 2,4 | 1,7 | 1,5 |
| Temperatur / °C | | 80,0 | 60,0 | 80,0 | 60,0 | 60,0 |
| Tg / °C | | 80,0 | 80,0 | 80,0 | 80,0 | 80,0 |
| FSG / % | | 39,9 | 39,7 | 39,6 | 39,6 | 39,3 |
| pH | | 6,8 | 6,8 | 6,9 | 6,9 | 6,9 |
| MTG / nm | | 105 | 134 | 124 | 131 | 145 |
| Visko / mPas | | 12 | 13 | 16 | 25 | 20 |

Tabelle 2: Eigenschaften der Beispielsdispersionen; Dispersionen; bei den trunkierten Versuchen handelt es sich um die Gegenbeispiele

| Versuch | | 1* | 2* | 3* | 4* | 5 |
|---|---|---|---|---|---|---|
| Acrylatdispersion / g | | 62,5 | 62,5 | 62,5 | 62,5 | 62,5 |

(fortgesetzt)

| Versuch | | 1* | 2* | 3* | 4* | 5 |
|---|---|---|---|---|---|---|
| Butyldiglykol / g | | 10,0 | 10,0 | 10,0 | 10,0 | 12,0 |
| Wasser / g | | 23,0 | 23,0 | 23,0 | 23,0 | 21,0 |
| BYK 346 / g | | 0,5 | 0,5 | 0,5 | 0,5 | 0,5 |
| Optik | | 1 | 1 | 1 | 1 | 1 |
| Pendelhärte | | 204 | 202 | 206 | 207 | 195 |
| DH (98% EtOH) | | 60 | 60 | 60 | 60 | 80 |

Es ist erkennbar, dass nur die erfindungsgemäße Dispersion gleichzeitig eine ausreichende Pendelhärte von > 180 sek. bei gleichzeitig guter Filmoptik in Kombination mit einer hohen Ethanolbeständigkeit aufweist.

## Patentansprüche

1. Wässrige Polyacrylat-Dispersion enthaltend als Aufbaukomponenten

   a) 60 bis 90 Gew.-% Styrol und/oder andere vinylaromatische Verbindungen,
   b) 6,5 bis 20 Gew.-% eines Acrylsäureesters,
   c) 0,5 bis 5 Gew.-% einer Polyvinylidenverbindung einer Funktionalität ≥ 2,
   d) 2 bis 5 Gew.-% eines säurefunktionellen, olefinisch ungesättigten Monomers sowie
   e) 1 bis 10 Gew.-% eines Methacrylsäureesters,

   wobei sich die angegebenen Gewichtsanteile zu 100 Gew.-% addieren und die resultierende Dispersion eine Glastemperatur von > 70 °C aufweist.

2. Wässrige Polyacrylat-Dispersion gemäß Anspruch 1, **dadurch gekennzeichnet, dass** diese eine Glastemperatur von 75 °C bis 90 °C aufweist.

3. Wässrige Polyacrylat-Dispersion gemäß Anspruch 1, **dadurch gekennzeichnet, dass** die in den Dispersionen enthaltenen Polymer-Partikel eine mittlere Teilchengröße von 80 bis 200 nm aufweisen.

4. Wässrige Polyacrylat-Dispersion gemäß Anspruch 1, **dadurch gekennzeichnet, dass** Komponente c) 1,4-Butandioldiacrylat, Trimethylolpropandimethacrylat, Ethylenglykoldimethacrylat oder 1,6-Hexandioldimethacrylat ist.

5. Verfahren zur Herstellung der Polyacrylat-Dispersion gemäß Anspruch 1, **dadurch gekennzeichnet, dass** zunächst eine Teilmenge des Emulgators zusammen mit der Hauptwassermenge vorgelegt wird, daraufhin 10 Gew.-% der Monomermischung ohne Vernetzungsmittel in einem ersten Polymerisationsschritt unter paralleler Dosierung der wässrigen Initiatorlösung zu einer Polymersaat umgesetzt werden und anschließend die weitere Dosierung der Monomermischung mit dem Vernetzungsmittel c) erfolgt, wobei die wässrige Initiatorlösung zusammen mit dem Emulgator parallel zudosiert wird.

6. Verwendung der Polyacrylat-Dispersion gemäß Anspruch 1 zur Herstellung von Lacken zur Beschichtung von Substraten wie Holz, Metall, Kunststoff, Glas und mineralischen Untergründen.

7. Verwendung der Polyacrylat-Dispersion gemäß Anspruch 1 zur Herstellung von Klarlacken oder pigmentierten Lacken.

8. Beschichtungsmittel, enthaltend die wässrige Polyacrylat-Dispersion gemäß Anspruch 1.

**Europäisches Patentamt**
**European Patent Office**
**Office européen des brevets**

# EUROPÄISCHER RECHERCHENBERICHT

Nummer der Anmeldung

EP 09 00 3710

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 285 034 A (BASF LACKE & FARBEN [DE]) 5. Oktober 1988 (1988-10-05) * Seite 9, Zeile 10 - Zeile 20 * * Seite 3, Zeile 44 - Zeile 49 * ----- | 1-9 | INV. C08F212/08 C09D125/08 |
| Y | DATABASE WPI Week 200642 Thomson Scientific, London, GB; AN 2006-406421 XP002542627 & JP 2006 117797 A (KANSAI PAINT CO LTD) 11. Mai 2006 (2006-05-11) * Zusammenfassung * ----- | 1-9 | |

RECHERCHIERTE SACHGEBIETE (IPC)

C08F

Der vorliegende Recherchenbericht wurde für alle Patentansprüche erstellt

| Recherchenort | Abschlußdatum der Recherche | Prüfer |
|---|---|---|
| Den Haag | 24. August 2009 | Friederich, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 00 3710

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 0285034 | A | 05-10-1988 | AU | 612361 B2 | 11-07-1991 |
| | | | AU | 1545888 A | 02-11-1988 |
| | | | BR | 8807440 A | 15-05-1990 |
| | | | CA | 1323119 C | 12-10-1993 |
| | | | DE | 3710668 A1 | 13-10-1988 |
| | | | WO | 8807565 A1 | 06-10-1988 |
| | | | EP | 0364450 A1 | 25-04-1990 |
| | | | ES | 2028158 T3 | 01-07-1992 |
| | | | JP | 6089116 B | 09-11-1994 |
| | | | US | 5331052 A | 19-07-1994 |
| | | | ZA | 8802271 A | 22-09-1988 |
| JP 2006117797 | A | 11-05-2006 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3104231 P
- US 5225456 P
- US 4056503 P
- WO 0039181 A

**In der Beschreibung aufgeführte Nicht-Patentliteratur**

- *Bulletin of the American Physical Society,* 1956, vol. 1 (3), 123